# EUROPÄISCHE PATENTSCHRIFT

(11) **EP 0 793 086 B1**
(45) Veröffentlichungstag und Bekanntmachung des Hinweises auf die Patenterteilung: **23.07.2003**
(21) Anmeldenummer: 97102471.6
(22) Anmeldetag: 15.02.1997
(51) Int. Cl.: G01M 17/007, G01M 15/00

(54) **Verfahren und Vorrichtung zum Prüfen von Kraftfahrzeugen**
Procedure and arrangement for testing vehicles
Procédé et système d'essai de véhicules

(30) Priorität: 01.03.1996 DE 19607950
(43) Veröffentlichungstag der Anmeldung: 03.09.1997
(73) Patentinhaber: Schenck Pegasus GmbH, 66571 Eppelborn (DE)
(72) Erfinder: Gnielka, Peter, Dr., 64287 Darmstadt (DE); Römer, Klaus, 35321 Laubach (DE); Giers, Claus-Dieter, 64859 Eppertshausen (DE)
(74) Vertreter: Wieske, Thilo

(56) Entgegenhaltungen:
- EP-A- 0 306 362
- EP-A- 0 602 920
- EP-A- 0 685 723

## Beschreibung

Die Erfindung bezieht sich auf ein Verfahren und ein System zum Prüfen von Kraftfahrzeugen, wie z. B. Personenkraftwagen, Lastkraftwagen oder Motorräder in einem mit Prüfeinrichtungen versehenen Prüfbereich.

Ein System zur gleichzeitigen Prüfung von mehreren Kraftfahrzeugen, die sich auf verschiedenen Prüfständen in einem technischen Kontrollzentrum, einer Reparaturwerkstatt oder am Ausgang einer Fertigungsstraße, also in einem Prüfbereich befinden, ist in der EP-B1 0 306 362 beschrieben. Das System weist eine Steuerkonsole auf, die an eine mit den verschiedenen Prüfständen verbundene Rechnerzentraleinheit angeschlossen ist. Es sind Fernsteuergeräte vorgesehen, die ein Signal für die Identität des Fernsteuergeräts und für Fernsteuerdaten für die Prüfstände übertragen. Über die Steuerkonsole wird jedem Fahrzeug, das sich in dem Kontrollzentrum einfindet, ein Fernsteuergerät und eine Identität zwischen Fahrzeug und Fernsteuergerät und damit der Prüfeinrichtung zugeordnet. Die Zentraleinheit ist mit Anzeigemitteln und Fernsteuerempfängern verbunden. Bei diesem System ist eine Vernetzung zur Durchführung der Prüfungen und zur Auswertung der Prüfergebnisse erforderlich.

Ein System zur automatischen Identifizierung von Transponder aufweisenden Kundenfahrzeugen, zur Diagnose derselben und zur Feststellung von Bewegungen innerhalb einer Service-Station ist der EP-A1 0 602 920 zu entnehmen. Die Transponder werden auf die Fahrzeug-Identifizierungsmerkmale abgefragt und diesen werden entsprechende Diagnosewerte, z. B. der Reifendruck zugeordnet. Wird das Fahrzeug an geeigneter Stelle in der Service-Anlage, beispielsweise an einer Zapfsäule, wieder identifiziert, werden die Diagnoseergebnisse sowie Werbebotschaften dem Kunden angezeigt und diese Informationen gegebenenfalls auch ausgedruckt. Die Erfassung der Identifizierungsmerkmale, der Diagnosesignale, deren Zuordnung und Auswertung sowie die Anzeige werden von einer in einem Netz angeordneten Auswerteund Kontrolleinheit gesteuert, die mit Subsystemen an den verschiedenen Service-Stellen, wie Tankinseln etc. vernetzt ist. Der Aufbau derartiger Datennetze ist aufwendig, die Anordnung bedingt Verkabelungen und der Betrieb ist empfindlich gegen Ausfall von Subsystemen.

Der Erfindung liegt deshalb die Aufgabe zugrunde, ein Prüfverfahren und ein Prüfsystem anzugeben, das einfach aufgebaut ist und eine geringe Störanfälligkeit aufweist. Erfindungsgemäß wird diese Aufgabe mit den Merkmalen der unabhängigen Patentansprüche gelöst.

Der Transponder wird vor Beginn des Prüfdurchlaufes mit allen erforderlichen Daten versehen. Dazu zählen die fahrzeugspezifischen Daten, so z. B. Art wie Pkw oder Lkw, Hersteller, Typ, Baujahr, Antriebsart etc. Für Prüfungen außerhalb des Herstellerwerks werden weitere Daten, wie z. B. Halter, Kilometerleistung etc. in den Transponder eingespeichert. Es können im nächsten Schritt Angaben über den erforderlichen bzw. gewünschten Prüfungsumfang, wie z. B. Bremsenprüfung, Prüfung der Lichtanlage, Sichtprüfung des Fahrgestells, Prüfung der Fahrwerkgeometrie etc. gespeichert oder aus gespeicherten Werten ausgewählt und zwischengespeichert werden. Darüberhinaus kann dann eine Speicherung bzw. Aktivierung von Daten im Zusammenhang mit den verwendeten Prüfeinrichtungen vorgenommen werden, wie z. B. die Konfigurierung von Standard-Schnittstellen im Hinblick auf die Verwendung von Prüfeinrichtungen verschiedenster Hersteller. Der so konfigurierte Transponder wird dann vorzugsweise am Fahrzeug abnehmbar angebracht. Er kann während des gesamten Prüfdurchlaufs am Fahrzeug verbleiben oder bei in einer Prüfeinrichtung befindlichen Fahrzeug vom Fahrzeug abgenommen und an Kontaktstellen dieser Prüfeinrichtung angeordnet werden. Bei Sichtprüfungen kann er von dem Prüfer getragen und manuell vorzugsweise an Eingabestationen mit Prüfergebnis-Daten versehen werden. Die Prüfergebnis-Daten werden an jeder Prüfeinrichtung bzw. an jeder Prüfstelle vorzugsweise automatisch oder auch manuell dem Transponder-Eingangsanschluß übermittelt und wiederverwertbar gespeichert. Nach Abschluß aller vorgesehenen Prüfungen werden die gespeicherten Daten abgerufen und in einer Auswerteeinheit ausgewertet und zu Dokumentationszwecken ausgedruckt und/oder gespeichert. Mit der Erfindung wird erstmals eine dezentral organisierte, äußerst flexible Fahrzeugprüfung vorgeschlagen. Es ist nunmehr in vorteilhafter Weise möglich, beliebigen Fahrzeugen beliebige freie Prüfstände zuzuweisen, was insbesondere bei automatisierten Prüfanlagen mit mehreren Prüfstraßen durch Wechsel zwischen den Prüfstraßen eine signifikante Verminderung der Durchlaufzeit und damit eine Erhöhung des Gesamtdurchsatzes und Vermeidung bzw. Verringerung von Wartezeiten ermöglicht. Auch auf den Ausfall einer Prüfkomponente kann schnell und einfach reagiert werden. Desweiteren werden Modernisierungen des ganzen Prüfsystems bzw. der Prüfanlage durch Austausch einzelner Prüfeinrichtungen erheblich vereinfacht, da bei automatisierten Prüfbereichen keine zentrale Anbindung bzw. Vernetzung aller Prüfeinrichtungen erforderlich ist.

Eine Ausführungsform der Erfindung, bei der vorgesehen ist, daß der Transponder vom Fahrzeug getrennt und an einer Kontakteinrichtung eine Prüfeinrichtung angeordnet wird, vermeidet in vorteilhafter Weise Verkabelungen zwischen der Prüfeinrichtung und dem Transponder oder ist bei drahtloser Übertragung vorteilhaft durch Vermeidung längerer Übertragungswege oder bei Störeinstrahlungsmöglichkeiten.

Insbesondere bei Sichtprüfungen ist es vorteilhaft, daß Prüfergebnis-Daten über eine manuell betätigte Eingabevorrichtung in den Transponder eingegeben werden können.

Bei einer vorteilhaften Ausgestaltung, bei der das Fahrzeug die Prüfeinrichtungen fahrergesteuert anfährt, lassen sich unvorhergesehene Prüfzeitverlängerungen aufgrund z. B. von festgestellten Mängeln durch Ausweichen auf andere Prüfeinrichtungen sehr einfach ausgleichen. Besonders günstig ist die Vermittlung von prüfablaufspezifischen Informationen über z. B. ein Display am Transponder, in dem auch die nächste anzufahrende Prüfeinrichtung insbesondere grafisch angezeigt werden kann. Unerfahrene Fahrer können durch die Display-Nachrichten auf einfache Weise durch die Prüfprozedur geführt werden.

Zur Verkürzung der Durchlaufzeit dient auch eine Ausgestaltung, bei der dem Transponder Informationen über nicht belegte Prüfeinrichtungen übermittelt werden; dabei wird allerdings vorausgesetzt, daß eine zentrale Steuereinheit mit den betreffenden Informationen versorgt wird.

Prüfungen im Einmann-Modus werden ermöglicht oder zumindest erleichtert durch Übermittlung von Bedienungs- oder Betätigungssignalen an eine Prüfeinrichtung mit Hilfe des Transponders, wobei eine drahtlose Übermittlung besonders vorteilhaft ist.

Werden insbesondere die Prüfergebnis-Daten einer vom Transponder trennbaren Speichereinrichtung übermittelt, so kann der Fahrzeugbesitzer auf einfachste Weise eine vollständige maschinenlesbare Dokumentation erhalten, was insbesondere bei Nachprüfungen vorteilhaft ist. Eine schnellere Abwicklung ist auch bei der nächsten Prüfung gegeben, da die Konfiguration des Transponders vollständig oder nahezu vollständig entfallen kann durch Einsetzen der fahrzeugspezifischen Speichereinrichtung bzw. Speicherkarte in den Transponder, der seinerseits die aktuellen Daten der einzelnen Prüfeinrichtungen gespeichert bereithält.

Weitere Merkmale und Vorteile der Erfindung sind den Patentansprüchen und der nachfolgenden Beschreibung eines bevorzugten Ausführungsbeispiels zu entnehmen.

Es zeigen:
- Fig. 1:: einen Prüfbereich mit Prüfeinrichtungen für Kraftfahrzeuge

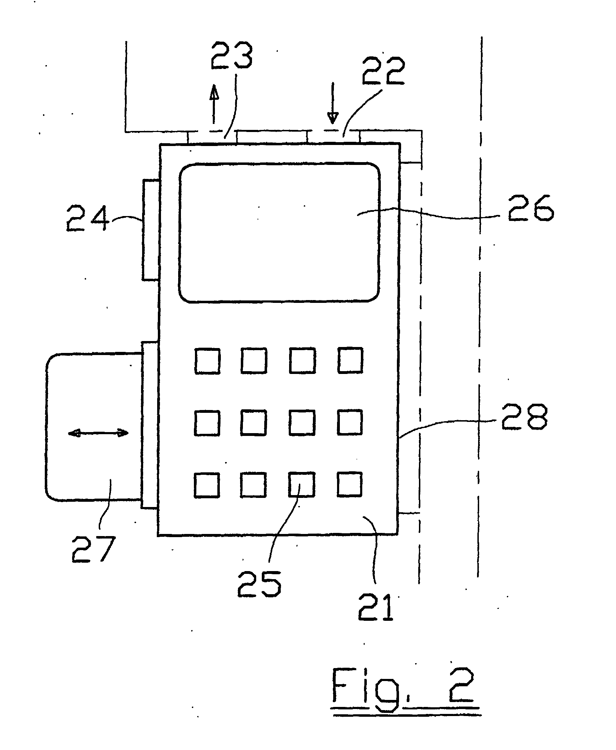

- Fig. 2:: einen Transponder zum Einsatz bei Kraftfahrzeugprüfungen

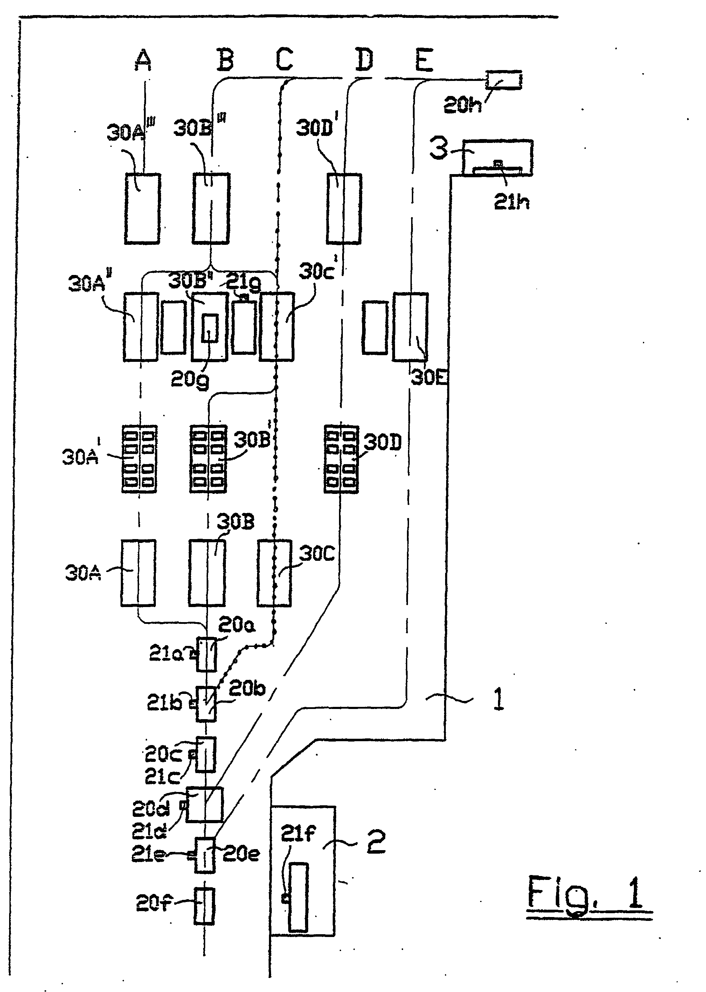

In Fig. 1 ist ein Prüfbereich 1 für Kraftfahrzeuge 20 mit einzelnen Prüfeinrichtungen 30 schematisch dargestellt. Der Prüfbereich weist im dargestellten Beispiels fünf Prüfstraßen A, B, C, D und E auf.

Die Prüfstraße A weist vier Prüfeinrichtungen 30A, 30A', 30A'' und 30A''' auf, die Prüfstraße B vier Prüfeinrichtungen 30B, 30B', 30B'' und 30 B''', die Prüfstraßen C und D jeweils zwei Prüfeinrichtungen 30C und 30C' bzw. 30D und 30D' und die Prüfstraße E lediglich eine Prüfeinrichtung 30E.

Die Prüfeinrichtung 30A der Prüfstraße A ist für Prüfungen der Lichtanlage des Kraftfahrzeugs ausgelegt. Sensoren und Meßeinrichtungen erfassen Funktionen der Fahrzeugleuchten, z. B. der Scheinwerfer einschließlich der Scheinwerfereinstellung. Die Prüfeinrichtung 30A' ist als Rollenprüfstand für die Fahrzeugbremsen ausgebildet. In der Prüfeinrichtung 30A'' findet die Sichtprüfung der Fahrzeugunterseite und gegebenenfalls eine Vermessung der Achsgeometrie statt; die Prüfeinrichtung weist dazu eine Grube zum Aufenthalt des Prüfers auf. Die Prüfeinrichtung 30A''' ist als Abgasprüfstand ausgebildet.

Die Prüfstraße B weist wie die Prüfstraße A Prüfeinrichtungen 30B für die Lichtanlage, 30B' für die Fahrzeugbremsen, 30B" für die Sichtprüfung und 30B''' für die Abgaswerte auf.

Die Prüfstraße C weist Prüfeinrichtungen 30C für Abgaswerte und 30C' für die Sichtprüfung auf, während die Prüfstraße D zwei Prüfeinrichtungen 30D und 30D' für die Lkw-Prüfung aufweist. Die Prüfstraße E hat lediglich eine Prüfgrube 30E für Sichtuntersuchungen.

Die Prüfstraßen A bis E können jedoch je nach den Prüfanforderungen auch unterschiedliche oder zusätzliche Bestückungen aufweisen. Auch können die Prüfeinrichtungen z. B. für die Fahrzeugbremsen unterschiedliche Leistungsmerkmale umfassen, unterschiedlich ausgestaltet sein oder von unterschiedlichen Herstellern stammen. Es reicht unter Umständen aus, wenn nur eine der Prüfeinrichtungen 30A', 30B' für die Bremsprüfung von allradangetriebenen Fahrzeugen geeignet ist, während auf der anderen Prüfeinrichtung derartige Fahrzeuge nicht prüfbar sind. Dies gilt auch für Bremsprüfeinrichtungen für Anti-Blockier-Bremsanlagen.

Weiterhin können in einer Prüfeinrichtung mehrere Funktionen vereinigt sein, z. B. kann die Prüfeinrichtung für die Sichtprüfung auch mit Meßeinrichtungen für die Achsgeometrie etc. versehen sein.

Im Prüfbereich sind mindestens eine Transponderkonfigurationsund -ausgabestation 2 und mindestens eine Transponderauswerteund -rücknahmestation 3 vorgesehen. In der Station 2 werden die prüfbereichseigenen Transponder 21, mit denen jedes in den Prüfbereich einfahrende Kraftfahrzeug 20 versehen wird, konfiguriert.

Die Transponder 21 weisen in einer Minimalausstattungsvariante Speichereinrichtungen und zumindest einen Dateneingang 22 und zumindest einen Datenausgang 23 auf. Ferner können Schnittstellen 24 vorgesehen sein, die auf die in dem Prüfbereich vorhandenen Prüfeinrichtungen angepaßt sind. In der dargestellten Ausstattungsvariante weisen die Transponder 21 ferner Betätigungseinrichtungen 25 auf, mit denen Steuersignale z. B. an die Prüfeinrichtungen abgegeben werden können. Ferner ist im dargestellten Beispiel an den Transpondern eine Anzeigeeinrichtung 26, die vorzugsweise als LCD-Display ausgebildet ist, vorgesehen. Hier kann z. B. grafisch der gesamte Prüfbereich 1 mit den Prüfeinrichtungen 30 schematisch zwecks Benutzerführung abgebildet werden. Es kann aber auch eine alphanumerische Anzeige zur Benutzerführung auch bei den einzelnen Prüfverfahrensschritten einer Prüfeinrichtung vorgesehen sein. Der Transponder 21 weist im dargestellten Ausführungsbeispiel eine wegnehmbare Speichereinrichtung in Form einer Speicherkarte 27 auf, in die Daten eingegeben und ausgelesen werden können. Schließlich ist der Transponder 21 noch mit einer Halteeinrichtung 28 versehen, mit der er wegnehmbar am Fahrzeug 20 oder an einer Prüfeinrichtung 30 befestigt werden kann. Im dargestellten Ausführungsbeispiel ist dies eine Magnetleiste; es können jedoch auch andere schnell lösbare Halteeinrichtungen wie z. B. Rast- oder Klemmeinrichtungen alternativ oder zusätzlich vorgesehen werden. Strichpunktiert ist dargestellt der Kontaktbereich einer Prüfeinrichtung 30.

Bei der Konfigurierung wird der Transponder mit allen erforderlichen Daten versehen. Dazu zählen die fahrzeugspezifischen Daten, so z. B. Art wie Pkw oder Lkw, Hersteller, Typ, Baujahr, Antriebsart etc. Diese Daten können auch auf einer vom Hersteller mitgelieferten Speicherkarte enthalten sein und von dieser aus in den Transponder 21 eingelesen werden. Für eine Prüfung in einem Prüfbereich außerhalb des Herstellerwerkes werden weitere Angaben wie z. B. Halter, Kilometerleistung, Alter des Fahrzeugs etc. in die Speichereinrichtung des Transponders eingegeben. Im nächsten Schritt werden Angaben über den erforderlichen bzw. gewünschten Prüfungsumfang, wie z. B. Bremsenprüfung, Prüfung der Lichtanlage, Sichtprüfung des Fahrgestells, Prüfung der Fahrwerkgeometrie etc. gespeichert oder aus gespeicherten Werten ausgewählt und zwischengespeichert. Vorgesehen ist dann die Speicherung bzw. Aktivierung von Daten im Zusammenhang mit den verwendeten Prüfeinrichtungen. Die herstellereigenen Schnittstellen an den Prüfeinrichtungen werden mittels Adaptereinrichtungen zu Schnittstellen gemacht, die Standard-Schnittstellen für die prüfbereichseigenen Transponder sind.

Der so konfigurierte Transponder 21 wird anschließend an dem Kraftfahrzeug 20 wegnehmbar befestigt.

In der Fig. 1 ist eine Reihe von mit Transpondern 21a bis 21e versehenen Kraftfahrzeugen 20a bis 20e dargestellt, ferner ein Fahrzeug 20f, dessen Transponder 21f in der Station 2 konfiguriert wird. Die Fahrzeuge 20 mit ihren Transpondern 21 durchlaufen nun auf beispielhaft angegebenen Wegen den Prüfbereich 1. Das Fahrzeug 20a legt den mit gestrichelten Linien skizzierten Weg über die Prüfstationen 30A, 30A' und 30A'' zurück, bis es anstelle der für den Fahrzeugtyp nicht optimal geeigneten Prüfeinrichtung 30A''' die Prüfeinrichtung 30B''' anfährt, über die es zur Station 3 gelangt. Dieser Weg über die Prüfeinrichtung 30B''' statt über 30A''' kann auch vorgegeben werden, wenn die Prüfeinrichtung 30A''' zusätzlich nicht erforderliche Prüfschritte ausführt, die die Prüfzeit unnötig verlängern würden.

Das Fahrzeug 20b, das z. B. zu einer Nachuntersuchung erschienen ist, wird in die Prüfstraße C eingewiesen, die in der darstellten Bestückung lediglich für eine Prüfung der Abgaswerte und eine Sichtprüfung ausgelegt ist. Bremsen- und Lichtanlagenprüfung entfallen. Das Fahrzeug 20b legt den in Fig. 1 punktiert gekennzeichneten Weg zurück.

Das Fahrzeug 20c soll im Prüfungsumfang wie das Fahrzeug 20a geprüft werden; ihm wird die Prüfstraße B mit den Stationen 30B, 30B', 30B'' und 30B''' zugewiesen und dies dem Fahrer auf dem Display 26 des Transponders 21 grafisch dargestellt. Beim Verlassen der Bremsprüfeinrichtung 30B' stellt sich heraus, daß die Prüfeinrichtung 30B'' für die Sichtprüfung durch ein Vorgängerfahrzeug 20g blockiert ist. Der Fahrer erhält über das Display 26 jetzt die Nachricht, die Prüfeinrichtungen 30C' (Prüfstraße C) und danach die Prüfeinrichtung 30B''' (Prüfstraße B) anzufahren. Will man diesen Vorteil der flexiblen Vorgehensweise haben, setzt dies allerdings voraus, daß eine zentrale Steuereinheit entsprechende Daten von allen Prüfeinrichtungen erhält, was aber drahtlos auf einfache Weise verwirklicht werden kann. Bei dem im Prüfstand 30B'' befindlichen Fahrzeug 20g ist der Transponder 21g abgenommen zwecks manueller Eingabe über beispielsweise eine Eingabetastatur durch den Prüfer.

Der Lkw 20d wird wie vom Transponder 21d angezeigt, über die Lkw-Prüfstaße D geleitet. Das Fahrzeug 21e, bei dem lediglich eine Sichtprüfung, beispielsweise aufgrund von nicht im Kraftfahrzeugbrief eingetragenen Fahrwerkänderungen erforderlich ist, wird über die Prüfstraße E geführt.

Die erfindungsgemäße Zuordnung von Transpondern 21 zu den Fahrzeugen 20 und die von einer zentralen Steuereinheit bewirkte Führung über das Display 26 des Transponders 21 ermöglicht es, den Fahrzeugdurchsatz durch einen Prüfbereich optimal zu steuern und flexibel auf Änderungen oder Gegebenheiten wie z. B. freie oder noch besetzte Prüfeinrichtungen zu reagieren.

Nach Durchlaufen der Prüfeinrichtungen gelangen alle Fahrzeuge zur Transponderauswerte- und -rücknahmestation 3. Der Transponder 21h wird vom Fahrzeug 20h abgenommen und die Prüfungsdaten nach Verbindung des Transponders 21 mit einer Auswerteeinheit ausgewertet. Die Prüfungsdaten und die ausgewerteten Daten werden z. B. zu Statistikzwecken in einer Datenbank des Prüfungsbereichs gespeichert. Auf diese Datenbank hat auch die Station 2 Zugriff. Die Prüfergebnisse werden ferner in die Speicherkarte 27 eingeschrieben. Die Speicherkarte 27 enthält also die fahrzeugspezifischen Daten, den Prüfungsumfang bzw. die Prüfungsschritte und gegebenenfalls Daten im Zusammenhang mit den verwendeten Prüfeinrichtungen, was z. B. bei Nachprüfungen in diesem Prüfbereich zweckmäßig ist. Die letzteren Daten bleiben zweckmäßigerweise auch in einer Speichereinrichtung des Transponders 21 gespeichert, da sie dann beim Konfigurieren des Transponders 21 auf ein anderes Fahrzeug 20 nicht neu eingelesen werden müssen. Die Speicherkarte 27 wird dem Besitzer des Fahrzeugs übergeben und sollte dann beim Fahrzeug 20 verbleiben, auch wenn es den Besitzer wechselt.

## Patentansprüche

1. Verfahren zum Prüfen von Kraftfahrzeugen, wie z. B. Personenkraftwagen, Lastkraftwagen oder Motorräder, in einem mit Prüfeinrichtungen versehenen Prüfbereich, bei dem ein Transponder mit fahrzeugspezifischen, prüfeinrichtungsspezifischen und/oder prüfprogrammspezifischen Daten versehen wird, bei dem jedes Fahrzeug mit dem die spezifischen Daten enthaltenden Transponder versehen wird, bei dem der Transponder benachbart zu Prüfeinrichtungen angeordnet wird, bei dem der Transponder mit Prüfergebnis-Daten versehen wird und bei dem nach Abschluß der Prüfung Prüfergebnis-Daten vom Transponder zu einer Auswerteeinrichtung übermittelt werden.

2. Verfahren nach Patentanspruch 1, **dadurch gekennzeichnet, daß** der Transponder zusätzlich mit halterspezifischen und/oder laufzeitspezifischen Daten versehen wird.

3. Verfahren nach Patentanspruch 1 oder Patentanspruch 2, **dadurch gekennzeichnet, daß** der Transponder vom Fahrzeug getrennt und an einer Übermittlungseinrichtung einer Prüfeinrichtung angeordnet wird.

4. Verfahren nach einem der vorhergehenden Patentansprüche, **dadurch gekennzeichnet, daß** Prüfergebnis-Daten über eine manuell betätigte Eingabevorrichtung in den Transponder eingegeben werden.

5. Verfahren nach einem der vorhergehenden Patentansprüche, **dadurch gekennzeichnet, daß** Daten, insbesondere die kraftfahrzeugspezifischen Daten und die Prüfergebnis-Daten über eine vorzugsweise bidirektionale Datenverbindung zwischen Transponder und Prüfeinrichtung ausgetauscht werden.

6. Verfahren nach einem der vorhergehenden Patentansprüche, **dadurch gekennzeichnet, daß** das Fahrzeug die Prüfeinrichtungen fahrergesteuert anfährt.

7. Verfahren nach einem der vorhergehenden Patentansprüche, **dadurch gekennzeichnet, daß** der Transponder dem Fahrer prüfablaufspezifische Informationen, insbesondere Informationen über die nächste anzufahrende Prüfeinrichtung vermittelt.

8. Verfahren nach Patentanspruch 7, **dadurch gekennzeichnet, daß** dem Transponder Informationen über nicht belegte Prüfeinrichtungen übermittelt werden.

9. Verfahren nach einem oder mehreren der vorhergehenden Patentansprüche, **dadurch gekennzeichnet, daß** der Transponder Bedienungs- oder Betätigungssignale an eine Prüfeinrichtung übermittelt.

10. Verfahren nach einem oder mehreren der vorhergehenden Patentansprüche, **dadurch gekennzeichnet, daß** die Prüfergebnis-Daten einer vom Transponder trennbaren Speichereinrichtung übermittelt werden.

11. Prüfsystem zum Prüfen von Kraftfahrzeugen (20), wie z. B. Personenkraftwagen, Lastkraftwagen oder Motorräder, in einem mit Prüfeinrichtungen (30) versehenen Prüfbereich, mit an den Fahrzeugen (20) befestigbaren, Speichereinrichtungen (27) und Dateneingänge (22) und Datenausgänge (23) aufweisenden Transpondern (21) mit Eingabeeinrichtungen (25) zum Eingeben und/oder Einlesen von Daten in die Transponder (21), mit Prüfeinrichtungen (30) mit Schnittstellen (24) zur vorzugsweise drahtlosen Datenkommunikation mit den Transpondern (21), mit Ausgabeeinrichtungen zur Ausgabe und/oder zum Auslesen von Prüfergebnis-Daten aus den Transpondern (21) und mit Auswerteeinrichtungen zur Erstellung von Prüfprotokollen oder Prüfberichten.

12. Prüfsystem nach Anspruch 11, **dadurch gekennzeichnet, dass** die Transponder (21) mit einer Befestigungsvorrichtung (28) zur lösbaren Befestigung an einem Kraftfahrzeug (20) oder einer Prüfeinrichtung (30) versehen sind.

13. Prüfsystem nach Anspruch 12, **dadurch gekennzeichnet, dass** die Transponder (21) eine Anzeigeeinrichtung (26) zur Anzeige von prüfablaufspezifischen Informationen, von Prüfergebnissen etc. aufweisen.

14. Prüfsystem nach einem oder beiden der vorhergehenden Ansprüche, **dadurch gekennzeichnet, dass** die Transponder (21) eine entfernbare Speichereinrichtung (27) vorzugsweise in Form einer Speicherkarte aufweisen.

15. Prüfsystem nach einem der Ansprüche 11 bis 14, **dadurch gekennzeichnet, dass** die Datenein- und -ausgänge (22, 23) sowie eventuelle Schnittstellen (24) der Transponder (21) zur drahtlosen Signalübermittlung vorgesehen sind.

## Claims

1. A procedure for testing vehicles such as cars, lorries or motorcycles in a test area equipped with test stations, in which procedure a transponder is loaded with vehicle-specific, test station-specific and/or test programme-specific data, every vehicle is supplied with a transponder containing the specific data, the transponder is positioned adjacent to test stations, the transponder is supplied with test results, and after completion of the tests, the test results are transferred from the transponder to an evaluation unit.

2. The procedure of claim 1, **characterised in that** the transponder is loaded additionally with owner-specific and/or service life-specific data.

3. The procedure of claim 1 or claim 2, **characterised in that** the transponder is removed from the vehicle and positioned at a data-transfer unit of a test station.

4. The procedure according to one of the preceding claims, **characterised in that** the test results are entered into the transponder by means of a manually operated input device.

5. The procedure according to one of the preceding claims, **characterised in that** data, in particular the vehicle-specific data and the test results, can be exchanged via a preferably bi-directional data link between the transponder and the test station.

6. The procedure according to one of the preceding claims, **characterised in that** the driver of the vehicle drives the vehicle through the test stations.

7. The procedure according to one of the preceding claims, **characterised in that** the transponder communicates inspection process-specific information to the driver, in particular information about which test station to approach next.

8. The procedure of claim 7, **characterised in that** the transponder is supplied with information about non-occupied test stations.

9. The procedure according to one or more of the preceding claims, **characterised in that** the transponder transmits control signals to a test station.

10. The procedure according to one or more of the preceding claims, **characterised in that** the test results are transferred to a storage device which can be removed from the transponder.

11. A testing arrangement for testing vehicles (20) such as cars, lorries or motorcycles in a test area equipped with test stations (30), having transponders (21) that are attachable to vehicles (20) and feature storage devices (27), data input ports (22) and data output ports (23), having input means (25) for entering and/or reading in data into the transponders (21), having test stations (30) with interfaces (24) for preferably wireless data communication with the transponders (21), having output means for the output and/or read-out of test results from the transponders (21) and having evaluation equipment for generating test records or test reports.

12. The testing arrangement of claim 11, **characterised in that** the transponders (21) are provided with attachment means (28) for releasable attachment to a vehicle (20) or a test station (30).

13. The testing arrangement of claim 12, **characterised in that** the transponders (21) have a display (26) for displaying inspection process-specific information, test results, etc.

14. The testing arrangement according to one of the preceding claims, **characterised in that** the transponders (21) have a removable storage device (27), preferably in the form of a memory card.

15. The testing arrangement according to one of claims 11 to 14, **characterised in that** the data input and output ports (22,23) and any interfaces (24) of the transponders (21) are intended for wireless signal transmission.

## Revendications

1. Procédé pour contrôler des véhicules automobiles, tels que des véhicules de tourisme, des camions ou des motos, dans une zone de contrôle munie d'un dispositif de contrôle, dans lequel un transpondeur est doté de données spécifiques au véhicule, spécifiques au dispositif de contrôle et / ou spécifiques au programme de contrôle, dans lequel chaque véhicule est doté du transpondeur contenant les données spécifiques, dans lequel le transpondeur est placé près du dispositif de contrôle, dans lequel lé transpondeur est doté des données concernant le résultat du contrôle et dans lequel les données concernant le résultat du contrôle sont transmises après l'achèvement du contrôle du transpondeur vers un dispositif d'exploitation.

2. Procédé selon la revendication 1, **caractérisé en ce que** le transpondeur est doté en outres de données spécifiques au propriétaire et / ou spécifiques à la durée d'utilisation.

3. Procédé selon la revendication 1 ou 2, **caractérisé en ce que** le transpondeur est séparé du véhicule et est disposé sur un dispositif de transmission d'un dispositif de contrôle.

4. Procédé selon l'une des revendications précédentes, **caractérisé en ce que** les données concernant le résultat du contrôle sont fournies au transpondeur au moyen d'un dispositif d'entrée actionné manuellement.

5. Procédé selon l'une des revendications précédentes, **caractérisé en ce que** des données, notamment les données spécifiques au véhicule automobile et les données concernant le résultat du contrôle sont échangées entre le transpondeur et le dispositif de contrôle au moyen d'une liaison de données de préférence bidirectionnelle.

6. Procédé selon l'une des revendications précédentes, **caractérisé en ce que** le véhicule est conduit par un conducteur dans les dispositifs de contrôle.

7. Procédé selon l'une des revendications précédentes, **caractérisé en ce que** le transpondeur transmet au conducteur des informations spécifiques au déroulement du contrôle, notamment des informations concernant le prochain dispositif de contrôle à atteindre.

8. Procédé selon la revendication 7, **caractérisé en ce que** le transpondeur transmet des informations sur les dispositifs de contrôle non occupés.

9. Procédé selon l'une ou plusieurs des revendications précédentes, **caractérisé en ce que** le transpondeur transmet des signaux de manoeuvre ou d'actionnement à un dispositif de contrôle.

10. Procédé selon l'une ou plusieurs de revendications précédentes, **caractérisé en ce que** les données concernant les résultats du contrôle sont transmises à un dispositif de stockage séparable du transpondeur.

11. Système de contrôle pour contrôler des véhicules automobiles (20), tels que des véhicules de tourisme, des camions ou des motos, dans une zone de contrôle équipée de dispositifs de contrôle (30), avec un transpondeur (21) pouvant être fixé au véhicule (20) et muni de dispositifs de stockage (27) et d'entrées de données (22) et de sorties de données (23), avec des dispositifs d'entrée (25) pour entrer et / ou lire des données dans le transpondeur (21), avec des dispositifs de contrôle (30) ayant des interfaces (24) pour communiquer des données de préférence sans fil avec le transpondeur (21), avec des dispositifs de sortie pour sortir et / ou pour extraire des données concernant le résultat du contrôle du transpondeur (21) et avec des dispositifs d'exploitation pour générer un protocole de contrôle ou des comptes rendus de contrôle.

12. Système de contrôle selon la revendication 11, **caractérisé en ce que** le transpondeur (21) est équipé d'un dispositif de fixation (28) destiné à être fixé de façon réversible à un véhicule automobile (20) ou à un dispositif de contrôle (30).

13. Système de contrôle selon la revendication 12, **caractérisé en ce que** le transpondeur (21) est équipé d'un dispositif d'affichage (26) pour afficher des informations spécifiques au déroulement du contrôle, des résultats du contrôle etc.

14. Système de contrôle selon l'une ou les deux revendications précédentes, **caractérisé en ce que** le transpondeur (21) est équipé d'un dispositif de stockage (27) amovible de préférence sous forme d'une carte mémoire.

15. Système de contrôle selon l'une des revendications 11 à 14, **caractérisé en ce que** les entrées et sorties de données (22, 23) ainsi que des éventuelles interfaces (24) du transpondeur (21) sont prévues pour la transmission sans fil des signaux.
